# EUROPÄISCHE PATENTSCHRIFT

(11) **EP 0 381 935 B1**
(45) Veröffentlichungstag und Bekanntmachung des Hinweises auf die Patenterteilung: **17.03.1993**
(21) Anmeldenummer: 90100484.6
(22) Anmeldetag: 11.01.1990
(51) Int. Cl.: G01N 1/20, B01J 4/00

(54) **Vorrichtung zur Gewinnung von Proben eines fliessfähigen Mediums**
Device for obtaining samples from a flowing medium
Dispositif pour obtenir des échantillons d'un milieu coulant

(30) Priorität: 10.02.1989 DE 3903959
(43) Veröffentlichungstag der Anmeldung: 16.08.1990
(73) Patentinhaber: SCHERING AKTIENGESELLSCHAFT, 59179 Bergkamen (DE)
(72) Erfinder: Demmer, Alfred, Dipl.-Ing., D-4300 Essen 12 (DE)

(56) Entgegenhaltungen:
- BE-A- 645 616
- GB-A- 908 038

## Beschreibung

Die Erfindung bezieht sich auf eine Vorrichtung entsprechend dem Oberbegriff des Anspruchs 1.

Bei zahlreichen verfahrenstechnischen Prozessen, die beispielsweise diskontinuierlich ablaufen und auf einem Stoffaustausch zwischen einem flüssigen und einem festen bzw. einem flüssigen und einem gasförmigen Medium beruhen ändern sich bestimmte Parameter des flüssigen Mediums in einer für den jeweiligen Prozeß spezifischen Weise. Häufig ist es hierbei zur Beurteilung des Prozeßablaufs von großer Bedeutung, die Beschaffenheit des flüssigen Mediums am Beginn und am Ende des Prozesses zu ermitteln, welches zu bestimmten Zeitpunkten die Entnahme von Proben erforderlich macht. Produktionsbedingt sind bisweilen Anfangs- und Endzeitpunkte des Prozesses im voraus ebensowenig bekannt wie die Zeit, während derer der Prozeß abläuft, so daß das Gewinnen von Proben zu den genannten Zeitpunkten mit einem vergleichsweise hohen Personaleinsatz verbunden ist.

Grundsätzlich könnten zwar mittels entsprechender Sensoren oder sonstiger Gebersysteme die genannten Zeitpunkte ermittelt werden und in Abhängigkeit hiervon eine automatische Probenentnahme durchgeführt werden. Jedoch ist diese Vorgehensweise mit einem vergleichsweise hohen Kostenaufwand belastet.

Es ist daher die Aufgabe der Erfindung, eine gattungsgemäße Vorrichtung zu entwerfen, mittels welcher bei geringstem Konstruktionsaufwand das automatische Ermitteln zweier Proben eines flüssigen Mediums erzielbar ist, welche jeweils den Zustand am Beginn und am Ende eines verfahrenstechnischen Prozesses beschreiben, und zwar ohne daß im voraus die Zeitpunkte der Probenahme bekannt sein müssen und ohne daß es besonderer Funktionselemente zur Ermittlung dieser Zeitpunkte bedarf. Gelöst ist diese Aufgabe bei einer gattungsgemäßen Vorrichtung durch die Merkmale des Kennzeichnungsteils des Anspruchs 1.

Die erfindungsgemäße Vorrichtung wird durch eine vertikal angeordnete Rohranordnung gebildet, bei der beiderseits eines zentralen Fallrohres U-förmige Rohrabschnitte vorhanden sind, in denen nach Ablauf des Prozesses Proben zurückgehalten werden, und zwar derart, daß in dem einen Rohrabschnitt eine solche Probe enthalten ist, die den anfänglichen Zustand des Mediums beschreibt und in dem anderen Rohrabschnitt eine solche Probe, die den Zustand des Mediums gegen Ende des Prozesses beschreibt. Die genannten U-förmigen Rohrabschnitte sind derart an das Fallrohr angeschlossen, daß sich beide mit dem fließfähigen Medium füllen, daß hingegen im stationären Betrieb nur einer der beiden Rohrabschnitte für den Durchfluß des Mediums zur Verfügung steht, wohingegen die Flüssigkeit in dem anderen Rohrabschnitt, welcher der Aufnahme der Anfangsprobe dient, stillsteht. Entsprechend dem äußeren Zuführungsdruck des fließfähigen Mediums sowie der quantitativen Wirkung der Drosselstelle steigt das Medium in dem letztgenannten Rohrabschnitt soweit, bis die in diesem anstehende Flüssigkeitssäule sich im hydrostatischen Gleichgewicht mit dem Flüssigkeitsdruck in der Nähe der ersten Zweigstelle befindet. Ist der Prozeß zu einem Abschluß gekommen, entleert sich die Rohranordnung bis auf den Inhalt der genannten U-förmigen Rohrabschnitte, wobei an deren Entnahmeorganen die genannten Flüssigkeitsproben jeweils für den Anfangsund den Endzustand des Prozesses entnehmbar sind. Im Bedarfsfall können darüber hinaus während des Prozesses über das Entnahmeorgan des Rohrabschnittes, der im stationären Betrieb den Durchfluß des Mediums zur Verfügung steht, weitere Proben entnommen werden. Man erkennt aus obigen Darstellungen, daß die erfindungsgemäße Vorrichtung eine Gewinnung von Anfangs- und Endproben eines Prozesses ermöglicht, ohne daß im voraus Informationen über die Zeitdauer des Prozesses bzw. dessen Anfangszeitpunkt notwendig sind. Erfindungsgemäß werden Informationen, die Anfangs- und Endphase des Prozesses signalisieren, unmittelbar aus dem Fluß des jeweiligen Mediums abgeleitet, wobei dementsprechende Flüssigkeitsproben zu Analysezwecken abrufbar bereitgehalten werden.

Die verlängerbare Ausgestaltung des der Ermittlung der Anfangsprobe dienenden Rohrabschnitts und/oder die Einstellbarkeit der Drosselwirkung gemäß den Merkmalen der Ansprüche 2 und 3 bringen unterschiedliche Möglichkeiten zur Anpassung an unterschiedliche Druckverhältnisse und/oder Medien mit sich. Unterschiedliche Druckverhältnisse können insbesondere von dem zu überwachenden Prozeß herrühren.

Aufgrund der Merkmale des Anspruchs 4 ist gewährleistet, daß die zu Analysezwecken zu untersuchenden Probenmengen, betreffend jeweils den Anfangs- und den Endzustand des Prozesses gleich sind.

Die Erfindung wird im folgenden unter Bezugnahme auf das in den Zeichnungen dargestellte Ausführungsbeispiel näher erläutert werden. Es zeigen:
Fig. 1 eine schematische Darstellung eines Anwendungsbeispiels der erfindungsgemäßen Vorrichtung;
Fig. 2 eine Detaildarstellung der erfindungsgemäßen Vorrichtung.

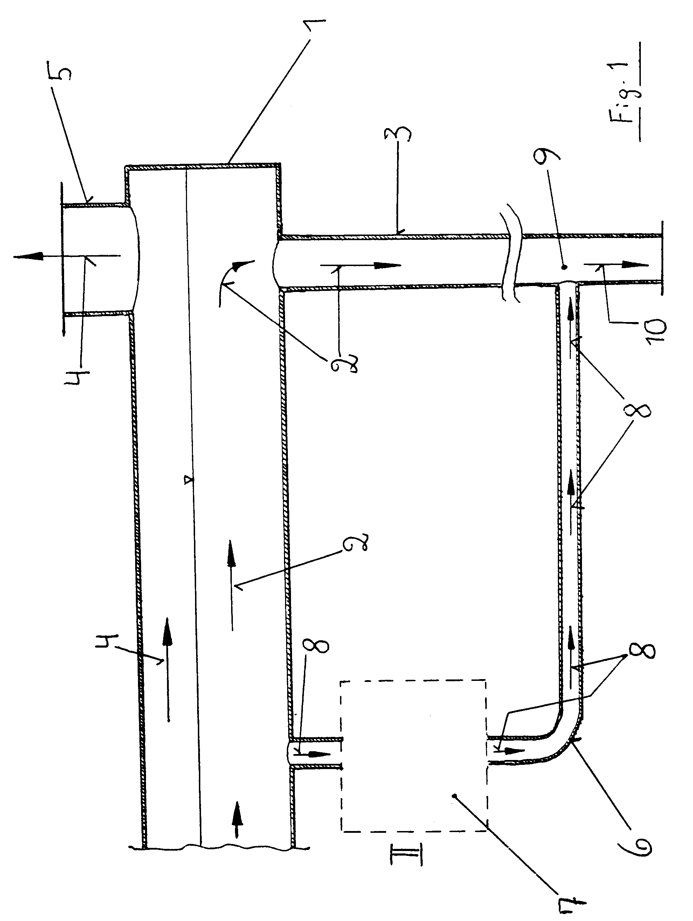

Mit 1 ist in Fig. 1 ein Teil eines Reaktors bezeichnet, innerhalb welchem eine Zweiphasenströmung geführt ist. Die flüssige Phase strömt in Richtung der Pfeile 2 auf eine Abflußleitung 3 zu, während eine gasförmige, in Richtung der Pfeile 4 strömende Phase den Reaktor 1 über einen Austritt 5 verläßt.

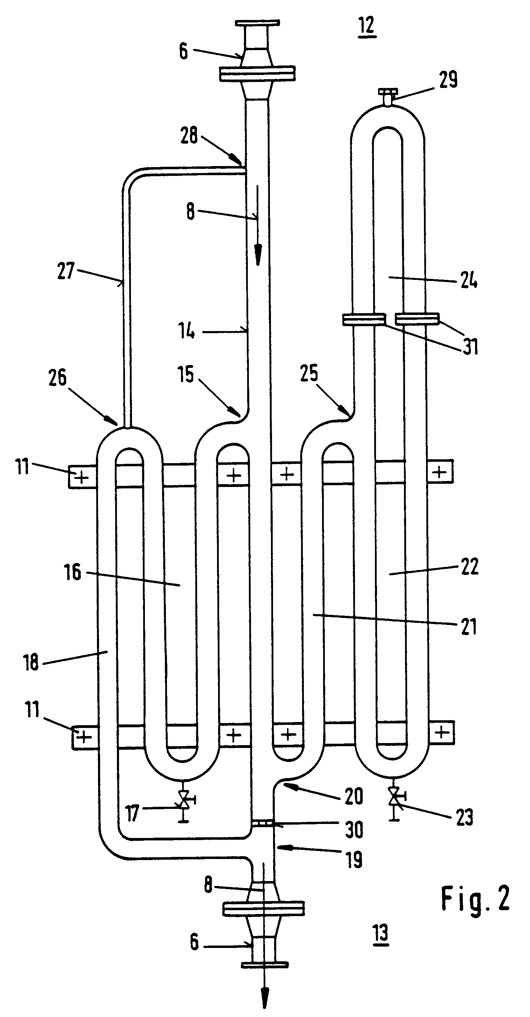

Mit 6 ist eine Bypaßleitung bezeichnet, welche einerseits an den Reaktor 1 und andererseits an die Abflußleitung 3 angeschlossen ist. Die innerhalb der Bypaßleitung 6 in Richtung der Pfeile 8 strömende flüssige Phase durchläuft einen Bereich 7, in welchem die erfindungsgemäße Vorrichtung angeordnet ist, deren Aufbau und Wirkungsweise im folgenden unter Bezugnahme auf Fig. 2 noch zu erläutern sein wird. An der Stelle 9 werden die Teilströme der Bypaßleitung 6 und der Abflußleitung 3 wiederum zusammengefaßt und in Richtung des Pfeiles 10 ausgetragen.

Die in Richtung des Pfeiles 2 innerhalb des Reaktors 1 strömende Flüssigkeit entstammt beispielsweise einem Extrahier-, einem Laugungs- oder einem sonstigen verfahrenstechnischen Prozeß und enthält demzufolge in gelöster oder auch dispergierter Form Stoffe, deren Konzentration im Zeitablauf veränderlich ist, wobei jedoch die Kenntnis der Konzentration zu Beginn und zu Ende des Prozesses von Interesse ist. Die erfindungsgemäße, in dem Bereich 7 angeordnete Vorrichtung dient der einfachen Feststellung von Anfangs- und Endkonzentration der genannten Flüssigkeit und es ist die Bypaßleitung 6 an einer solchen Stelle des Reaktors 1 angeschlossen, welche den gleichen Konzentrationswert wie der Anschlußpunkt der Abflußleitung 3 erwarten läßt.

Die erfindungsgemäße Vorrichtung wird im folgenden unter Bezugnahme auf Fig. 2 näher erläutert. In dieser Figur sind Funktionselemente, die mit derjenigen der Fig. 1 übereinstimmen, auch übereinstimmend beziffert.

Die erfindungsgemäße Vorrichtung besteht aus einer vertikal angeordneten, in dem gezeigten Ausführungsbeispiel an Schellenbändern 11 aufgehängten Leitungsanordnung. Letztere besteht aus einem zentralen, im oberen Bereich 12 den Einlauf und im unteren Bereich 13 den Auslauf bildenden Fallrohr 14, an welches an der Stelle 15 ein U-förmiger Rohrabschnitt 16 angeschlossen ist, an dessen tiefstem Punkt sich ein Entnahmeorgan 17 befindet. Beide Schenkel des U-förmigen Rohrabschnitts 16 sind gleich lang ausgebildet und es ist der, dem Fallrohr 14 abgekehrte Schenkel in einem Leitungsabschnitt 18 fortgeführt, der an einer Stelle 19 mit Abstand unterhalb der Stelle 15 wiederum in das Fallrohr 14 einmündet.

An einer Stelle 20 oberhalb der Stelle 19, die sich ungefähr auf gleicher Höhe mit dem Entnahmeorgan 17 befindet, ist von dem Fallrohr 14 ein Leitungsabschnitt 21 abgezweigt, der sich parallel zu dem Fallrohr 14 bis zu einer Höhe erstreckt, die der genannten Stelle 15 entspricht und hier in einen Rohrabschnitt 22 einmündet, der wiederum die Gestalt eines oberseitig offenen U aufweist. Die Schenkel des U erstrecken sich parallel zu dem Fallrohr 14 und sind an ihrer untersten Stelle mit einem Entnahmeorgan 23 versehen. An den Rohrabschnitt 22 schließt sich oberseitig ein weiterer Rohrabschnitt 24 an, der die Gestalt eines nach unten offenen U aufweist, dessen Schenkel sich wiederum parallel zu dem Fallrohr 14 erstrecken. Die Rohrabschnitte 22, 24 bilden - von der Einmündungsstelle 25 des Leitungsabschnitts 21 abgesehen - einen im wesentlichen geschlossenen Leitungszug.

Der höchste Punkt 26 des Übergangsbereichs zwischen der, dem Fallrohr 14 abgekehrten Seite des Rohrabschnitts 16 und dem Leitungsabschnitt 18 befindet sich auf gleicher Höhe mit der Stelle 15 bzw. der Einmündungsstelle 25. Mit 27 ist eine Entlüftungsleitung bezeichnet, die einerseits an dem genannten Punkt 26 und andererseits an einer Stelle 28 oberhalb der Stelle 15 an das Fallrohr 14 angeschlossen ist.

Mit 29 ist ein am höchsten Punkt des Rohrabschnitts 24 angeordneter Anschluß für eine zeichnerisch nicht dargestellte Entlüftungsleitung bzw. zum Anschluß eines Waschwasserschlauches bezeichnet. Im Verlauf des Fallrohres, und zwar oberhalb der Stelle 19, jedoch unterhalb der Stelle 20 befindet sich eine Drosselstelle, und zwar eine Blende 30 von definiertem Durchströmungsquerschnitt.

Es ist die Rohranordnung gemäß Fig. 2 entsprechend der Einzelheit II der Fig. 1 in die Bypaßleitung 6 eingebunden und steht zu Beginn des in dem Reaktor 1 ablaufenden Prozesses leer.

Mit Beginn des genannten Prozesses bewegt sich Flüssigkeit in Richtung der Pfeile 2 durch den Reaktor 1 bzw. in Richtung der Pfeile 8 durch die Rohranordnung gemäß Fig. 2 hindurch. Die Flüssigkeit tritt im oberen Bereich 12 ein, durchläuft zunächst das Fallrohr 14 und erfährt durch die Blende 30 eine starke Drosselung, welche in der Folge einen Anstieg des Flüssigkeitspegels innerhalb des Fallrohrs 14 und gleichzeitig innerhalb des Leitungsabschnitts 21 bewirkt. Hat der Flüssigkeitspegel das Niveau der Einmündungsstelle 25 sowie der Stelle 15 erreicht, füllen sich in der Folgezeit die U-förmigen Rohrabschnitte 16 und 22. Sobald diese gefüllt sind, beginnt der Flüssigkeitseinlauf in den Leitungsabschnitt 18 und damit ein Flüssigkeitsaustritt aus der Rohranordnung in dem genannten Bereich 13. Der sich bei stationären Strömungsverhältnissen schließlich einstellende Flüssigkeitspegel in den Rohrabschnitten 22, 24 ist von den Druckverhältnissen an der Stelle 20 abhängig, welche ihrerseits konstruktiv durch die Bemessung der Blende 30 festgelegt werden. Um in einfacher Weise wechselnden Druckverhältnissen und damit höheren Flüssigkeitssäulen innerhalb der Rohrabschnitte 16, 22 Rechnung tragen zu können, sind im Verlauf des Rohrabschnitts 24 Flanschverbindungen 31 vorgesehen, welche in einfacher Weise im Bedarfsfall ein Einsetzen von Verlängerungsrohrstücken ermöglichen. Um eine gute Beobachtungsmöglichkeit des Flüssigkeitspegels innerhalb des Rohrabschnitts 24 zu ermöglichen, kann dieser aus einem durchsichtigen bzw. durchscheinenden Kunststoff ausgebildet sein.

Ist der in dem Reaktor 1 ablaufende Prozeß zu einem Ende gelangt, kommt der Flüssigkeitsdurchfluß zum Erliegen, woraufhin die in Fig. 2 gezeigte Rohranordnung völlig ausläuft, mit Ausnahme der Rohrabschnitte 18 und 22. Aufgrund der oben stehenden Funktionsbeschreibung ergibt sich, daß in den Rohrabschnitten 16, 22 unterschiedliche Flüssigkeiten enthalten sind. Während die in dem Rohrabschnitt 22 zurückgehaltene Flüssigkeit eine solche ist, deren Konzentration derjenigen zu Beginn des Prozesses entspricht, liegt in der, in dem Rohrabschnitt 16 zurückgehaltenen Flüssigkeit eine solche vor, deren Konzentration derjenigen am Ende des Prozesses entspricht. Somit besteht die einfache Möglichkeit, über die Entnahmeorgane 17, 23 Proben zu entnehmen, durch deren Analyse die Konzentrationswerte des Anfangs- und Endzeitpunktes des genannten Prozesses ermittelbar sind. Im Bedarfsfall können auch während des Prozesses über das Entnahmeorgan 17 Proben entnommen werden, um Zwischenwerte zwischen Anfangs- und Endzeitpunkt zu gewinnen.

## Patentansprüche

1. Vorrichtung zur Gewinnung von Proben eines fließfähigen, im Zeitablauf eines verfahrenstechnischen Prozesses veränderlichen Mediums, welche Proben jeweils den Zustand des Mediums zu Beginn und am Ende des Prozesses darstellen, gekennzeichnet durch ein während des Prozesses zum Durchströmen bestimmtes Fallrohr (14) mit einer Drosselstelle, eine erste, stromaufwärts bezüglich der Drosselstelle angeordnete, in einen ersten U-förmigen Rohrabschnitt (22) einmündenden Abzweigstelle (20), eine zweite, mit Abstand stromaufwärts bezüglich der ersten Abzweigstelle (20) angeordneten, in einen zweiten U-förmigen Rohrabschnitt (16) einmündenden Abzweigstelle (15), wobei die im wesentlichen vertikal angeordneten ersten und zweiten Rohrabschnitte (16,22) die Gestalt eines oberseitig offenen U aufweisen, wobei der Rohrabschnitt (16) über einen Leitungsabschnitt (18) wiederum an das Fallrohr (14), und zwar stromabwärts bezüglich der Drosselstelle angeschlossen ist, wobei der erste Rohrabschnitt (22) oberseitig durch einen, die Gestalt eines nach unten offenen U aufweisenden Rohrabschnitts (24) im wesentlichen verschlossen ist und wobei sich an den, am Ende des Prozesses die zu gewinnenden Proben enthaltenden ersten und zweiten Rohrabschnitten (16,22), und zwar vorzugsweise an deren tiefsten Punkten Entnahmeorgane (17,23) befinden.

2. Vorrichtung nach Anspruch 1, dadurch gekennzeichnet, daß der erste Rohrabschnitt (22) verlängerbar und mit einem Anschluß (29) für Entlüftung und Reinigung versehen ist und daß vorzugsweise am höchsten Punkt (26) des Verbindungsbereichs zwischen dem zweiten Rohrabschnitt (16) und dem Leitungsabschnitt (18) eine Entlüftungsleitung (27) angeschlossen ist.

3. Vorrichtung nach Anspruch 1 oder 2, dadurch gekennzeichnet, daß die Drosselstelle in ihrer Drosselwirkung einstellbar ausgebildet ist.

4. Vorrichtung nach einem der vorangegangenen Ansprüche 1 bis 3, dadurch gekennzeichnet, daß sich die Einlaufbereiche der ersten und zweiten Rohrabschnitte (16,22) und der Verbindungsbereich zwischen dem zweiten Rohrabschnitt (16) und dem Leitungsabschnitt (18) auf gleichem Niveau befinden und daß die Schenkel der U-förmig ausgebildeten ersten und sweiten Rohrabschnitte (16,22) von gleicher Länge sind.

## Claims

1. Apparatus for obtaining samples of a flowable medium that varies over the course of a processing process, which samples represent the state of the medium at the beginning and at the end of the process, characterised by a down pipe (14) that has a throttle point and that is intended for the passage of the medium during the process, a first branching point (20) arranged upstream of the throttle point and leading into a first "U"-shaped pipe section (22), a second branching point (15) arranged upstream of and spaced from the first branching point (20) and leading into a second "U"-shaped pipe section (16), the substantially vertically arranged first and second pipe sections (16, 22) having the shape of a "U" that is open at the top, the pipe section (16) being connected to the down pipe (14) again, downstream of the throttle point, via a piping section (18), the first pipe section (22) being substantially closed at the top by a pipe section (24) having the shape of a "U" that is open at the bottom, and withdrawal means (17, 23) being located on the first and second pipe sections (16, 22) which, at the end of the process, contain the samples to be obtained, and preferably at the lowest points thereof.

2. Apparatus according to claim 1, characterised in that the first pipe section (22) can be lengthened and is provided with a connection (29) for venting and cleaning and that, preferably at the highest point (26) of the connecting region between the second pipe section (16) and the piping section (18), a venting line (27) is connected.

3. Apparatus according to claim 1 or 2, characterised in that the throttle point is constructed to be adjustable in its throttling action.

4. Apparatus according to one of the preceding claims 1 to 3, characterised in that the in-flow regions of the first and second pipe sections (16, 22) and the connecting region between the second pipe section (16) and the piping section (18) are on the same level, and the limbs of the "U"-shaped first and second pipe sections (16, 22) are of equal lengths.

## Revendications

1. Dispositif pour l'obtention d'échantillons d'un milieu fluide variable en fonction du temps lors d'un processus technologique, les échantillons devant représenter respectivement l'état du milieu au début et à la fin du processus, caractérisé par un tube de descente (14) destiné à être parcouru par le milieu pendant le processus et pourvu d'un point d'étranglement, un premier d'embranchement (20), disposé en amont par rapport au point d'étranglement et débouchant dans un premier tronçon de tube (22) en U, un second point d'embranchement (15), disposé à distance en amont par rapport au premier point d'embranchement (20) et débouchant dans un second tronçon de tube (16) en U, les premier et second tronçons de tube (16, 22), orientés pour l'essentiel verticalement, ayant la forme d'un U ouvert en haut, le second tronçon de tube (16) étant raccordé de nouveau à travers un segment de conduite (18) au tube de descente (14) en aval du point d'étranglement, le premier tronçon de tube (22) étant essentiellement fermé en haut par un tronçon de tube (24) sous la forme d'un U ouvert en bas, et des organes de prélèvement (17, 23) étant prévus sur les premier et second tronçons de tube (16, 22), de préférence à leurs points les plus bas, tronçons de tube (16, 22) qui contiennent à la fin du processus les échantillons à obtenir.

2. Dispositif selon la revendication 1, caractérisé en ce que le premier tronçon de tube (22) peut être allongé et est pourvu d'un raccord (29) pour la purge d'air et le nettoyage, et qu'une conduite de purge d'air (27) est raccordée de préférence au point (26) le plus haut de la zone de liaison entre le second tronçon de tube (16) et le segment de conduite (18).

3. Dispositif selon la revendication 1 ou 2, caractérisé en ce que l'effet d'étranglement du point d'étranglement est ajustable.

4. Dispositif selon une des revendications 1 à 3 précédentes, caractérisé en ce que les zones d'entrée des premier et second tronçons de tube (16, 22) et de la zone de liaison entre le second tronçon de tube (16) et le segment de conduite (18) sont situées au même niveau et que les branches des premier et second tronçons de tube (16, 22) en forme de U ont la même longueur.
